(19) Europäisches Patentamt
European Patent Office
Office européen des brevets

(11) Publication number: 0 350 059 A2

(12) # EUROPEAN PATENT APPLICATION

(21) Application number: 89112470.3

(22) Date of filing: 07.07.89

(51) Int. Cl.4: C08F 8/00 , C08G 81/02 , C08F 295/00

(30) Priority: 07.07.88 IT 2126588

(43) Date of publication of application: 10.01.90 Bulletin 90/02

(84) Designated Contracting States: AT BE DE ES FR IT NL SE

(71) Applicant: AUSIMONT S.r.l.
31, Foro Buonaparte
I-20100 Milano(IT)

Applicant: Himont Incorporated
2801 Centerville Road Three Little Falls Centre
Wilmington Delaware(US)

Applicant: Montedison S.p.A.
31, Foro Buonaparte
I-20121 Milan(IT)

(72) Inventor: Rendina, Gabriele
294/D, Corso Sebastopoli
I-10136 Torino(IT)
Inventor: Albizzati, Enrico
64, via Roma
I-28041 Arona Novara(IT)

(74) Representative: Zumstein, Fritz, Dr. et al
Dr. F. Zumstein Dipl.-Ing. F. Klingseisen
Bräuhausstrasse 4
D-8000 München 2(DE)

(54) **Monofunctional polymers of olefins and block copolymers obtained therefrom.**

(57) Functional polyolefins containing a terminal functional group; the block copolymers that can be obtained from such polyolefins by reaction with polymers reactive with the functional groups and the precursors used for the preparation of the functionalized polyolefins, which are made up of olefin polymers terminated at one end with Zn R groups where R is an alkyl or aryl radical with 1-10 carbon atoms.

EP 0 350 059 A2

## Monofunctional Polymers of Olefins and Block Copolymers Obtained Therefrom

The present invention refers to monofunctional olefinic polymers, block copolymers obtained from them, and polymeric precursors used for the preparation of the monofunctional polymers.

In the technical field there is a need for olefin polymers which will allow to resolve in a satisfactory manner the problem of lack of chemical functionality typical of polyolefins. Of particular interest is the ability to have at one's disposal polyolefins with metal adhesion properties, or that can be used as compatibilizing agents of polyolefins with noncompatible polymers.

From the technical literature there are well known copolymers of olefins formed by blocks of olefins which differ from one another, or by blocks which derive from the same olefin but have different steric configurations. These copolymers, however, found no industrial application basically because of the complex preparation methods. In fact, they are obtained with sequential polymerization processes of olefins using Ziegler-Natta catalysts, where the mild polymerization conditions, combined with the use of low active catalysts, are such as to render the processes unattractive from a practical point of view.

Also known are ethylene polymers containing blocks of polar monomers such as acrylic esters, which can be obtained either through high pressure radical polymerization of the ethylene, or through polymerization processes with Ziegler-Natta catalysts using suitable catalyt systems. The preparation processes of these copolymers found no practical application either.

Finally, there are known copolymers with an SB or SBS structure where S is a polystyrene block and B a polybutadiene block, and the derivatives of such copolymers obtained by hydrogenation of the polybutadiene block, which have SEB and SEBS structures, where EB indicates a block of ethylene and butylene units.

From the hydrogenated copolymers are obtained, by grafting with polar monomers, polymers with combined properties of chemical inertia, derived from the polyolefinic chain, and adhesion to metals characteristics which are typical of the polar groups introduced into the chain. The preparation of these functionalized polymers is, however, very complex and burdensome.

Now there are monofunctional olefin polymers from which one can obtain bi- or multiblock copolymers containing one or more polar monomer blocks, which offer a relatively simple solution to the problem of the lack of chemical functionality of polyolefins.

The monofunctional polyolefins of the invention are characterized by the fact that they terminate at one end with chemically functional groups, or structures containing chemically functional groups.
They are represented with the formula:
P—X
where P is a chain of homo or copolymer of olefins $CH_2=CHR$ where R is a hydrogen or an alkyl or aryl radical with 1-8 C, X is a functional group or a structure containing functional groups.

P, for example, could be polyethylene, polypropylene, ethylene-propylene copolymers, polybutene, isotactic or syndiotactic polystyrene.

Preferably P is isotactic polypropylene, ethylene-propylene rubber copolymers optionally containing smaller proportions of a diene selected among butadiene, hexadiene, 1,4 ethylidene norbornene.
The functional group include polar groups as well as polymerizable groups or halogen atoms.

Examples of functional groups are —COOR, —CO, $—NH_2$, —SCN, —CN, —OH and isocyanic groups.

The monofunctional polyolefins are obtained from polyolefins ended with -ZnR groups where R is an alkyl or aryl radical with 1-10 C by reaction with substances which give substitution reactions with $R'ZnR''$ type compounds, where $R'$ and $R''$, equal or different from each other, have the same meaning as the above mentioned R, or one of the two is a halogen atom or an OR group.

The polyolefins terminating with -Zn R groups are obtained through polymerization of the corresponding olefins or mixtures of olefins with Ziegler-Natta catalysts operating in the presence of chain terminators of —$ZnR'R''$ formula, where $R'$ and $R''$, equal or different from each other, are alkyl or aryl radicals containing 1-10 C.

The polymerization is carried out in the absence of hydrogen (in order not to have chain terminations different from those obtained with the Zn-alkyl compounds), operating at relatively low temperatures (room temperature or lower: this to limit the break reactions of the C-Zn bond) and at atmospheric pressure or lower (in order not to obtain molecular weights too high).

Polymerizations carried out under the above mentioned conditions using Zn-alkyl or aryl compounds as chain terminators are not known so far. The polymers obtained are formed mainly by polymeric chains terminated at one end with the -Zn R group.

The intrinsic viscosity (in o-dichlorobenzene at 135 °C) of the polymers is in general comprised

between 1 and 2 dl/g; the corresponding molecular weight $\overline{Mw}$ ranges from 100,000 to 400,000.

The polymers obtained this way are reacted with compounds which react with the -Zn R group operating under conditions where at least one of the reactants is dissolved in an inert hydrocarbon solvent or is in the melted state.

Examples of reactive compounds are the di- and polyisocyanates, the chloroesters such as chloroformiate, epichlorohydrin chloroamine, ketenes, ketones, aldehydes, chloroethers, oxygen.

From monofunctional polymers, bi- or multiblock copolymers can be obtained through reaction with polymers containing reactive groups.

Examples of reactive polymers that can be used are polyalkylene glycols, polyesters, polyamides, polyacrylates, polycarbonates, styrene copolymers with maleic anhydride, polyphenylenoxides, starch.

Examples of derived block copolymers have the following structure:

$$P-\overset{O}{\overset{\|}{C}}-\overset{H}{\overset{|}{N}}-Y-Z-P'$$

where P is a polyolefin chain;
Y is an arylene or arylalkylene radical containing from 6 to 14 C atoms or an alkylene radical with 1-20 C;
Z is a group of the formula:

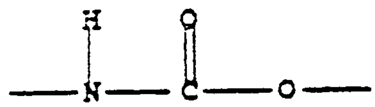
,
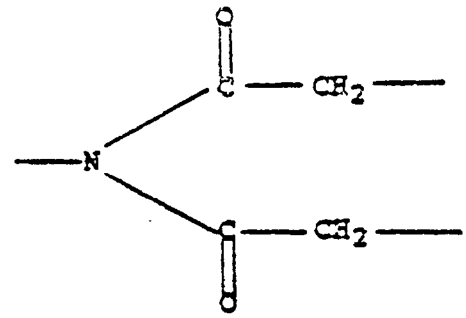

or

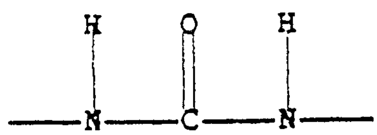

P′ is a macromolecule of a polymer selected among polycaprolactam, polyester, polyalkyleneglycol, polyvinylacetate, polyphenylene ether, starch.

These copolymers are obtained by reacting PX-polymers where X is a radical

$$-\overset{O}{\overset{\|}{C}}-NH-Y-N=CO$$

with polymers having groups which react with such a radical.

The polymers containing isocyanic groups are obtained reacting polyolefins terminated with the -ZnR group with compounds containing at least two isocyanic groups of the general formula
Y—(NCO)n
where Y has the meaning already indicated and n is a number from 2 to 10.

The operation is done under conditions where at least one of the two reagents is in a hydrocarbon solution, or in the melted state. The reaction may be carried out at a temperature usually between 20° and 150°C.

The preferred compounds containing isocyanic groups are: toluene-diisocyanate, diphenylmethane-diisocyanate, benzene-1,2,4-triisocyanate, naphtalene-1,2,5,7-tetraisocyanate.

The block copolymers of the invention are represented by the formulas PQP′ or PQP′QP. Moreover they may contain P multiblocks in their chain. In these formulas, P has the meaning already indicated, Q is a bivalent radical; P′ is a polymer chain containing polar groups. P′ in particular is a chain of a polymer selected from polyesters, polyamides, polyalkylene glycols, polyacrylates, and polymethacrylates, polyvinylacetate, styrene copolymers with maleic anhydride. Q is a bivalent radical which may have the following structure

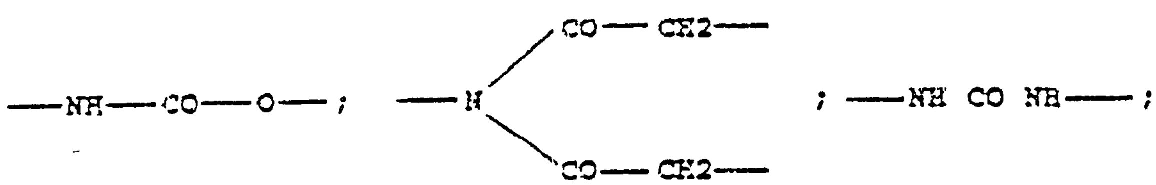

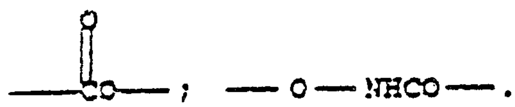

The preparation of block copolymers is done by reacting the reagents in an inert hydrocarbon solvent at a temperature where there is dissolution of the polyolefin prepolymer, or operating with one or both polymers in the melted state.

The block copolymers of the invention may be used in applications where there is a need for chemical inertia properties of the polyolefins combined with chemical functionality properties typical of the polar groups present in such copolymers. They are used particularly as polymers compatibilizers of polymers in adhesive films, for coating metals also mixed with other polymers.

The following examples are given to better illustrate the invention.

Example 1

In a cylindrical reactor of about 1500 cc. ---------------------- are charged, in a nitrogen atmosphere, in the order listed:

800 cc of anhydrous heptane

10 mM of $Zn(C_2H_5)_2$

660 mg of a catalyst prepared according to the methodology described in example 1 of the Italien patent 1098272

5 mM od $Al(C_2H_5)_3$

0.25 mM of phenyl-triethoxysilane.

The thermostat of the reactor was set at 15°C and a propylene current was bubbled for a period of 5 hrs.

The solvent was then removed and the polymer washed with 500 cc of epthane.

Then, to the polymer were added 700 cc of epthane and 10 g of diphenylmethane-diisocyanate.

The solvent was brought to the boiling temperature and then refluxed for 8 hrs.

Finally the solvent was removed, the polymer washed three times with epthane and then vacuum dried. 120 g of polymer were isolated this way.

The GPC analysis (in O-dichlorobenzene at 135°C) gave the following results:

| | |
|---|---|
| $\overline{Mn}$ = | 44,600 |
| $\overline{Mw}$ = | 341,000 |
| $\overline{Mz}$ = | 767,600 |
| $\overline{Mvis}$ = | 287,100 |
| $\overline{Mw}$ / $\overline{Mn}$ = | 7.64 |

A nitrogen content equal to 0.086% was found on the polymer as such after dissolution in xylene and precipitation in methanol this value fell to 0.059%; after an additional dissolution and precipitation it was recorded at 0.058%. These data indicate that the nitrogen was chemically bound to the polymer in an average of 1.8 atoms per polymeric chain.

Example 2

In a 1.5 lt autoclave with an agitator and the thermostat set at 25°C are introduced, after drying and

scavanging, in order as listed:
100 cc of propylene
5 mM $Al(C_2H_5)_2Cl$
10 mM of $Zn(C_2H_5)_2$
and ethylene up to a total pressure of 12.2 atm.

Under argon pressure then was injected a solution of 0.05 mM of triacetylacetone vanadium ($VAcac_3$) and 1 mM of ethyltrichloroacetate in 25 cc. of anhydrous and de-areated toluene.

The polymerization was done at 25°C for 1 hr continuing to add ethylene to maintain a constant pressure of 12.2 atm.

The unreacted monomers were then removed by degassing the reactor; 1000 cc. of anhydrous acetone were introduced and the autoclave was agitated for 30 minutes.

The acetone was then removed and 600 cc ot anhydrous toluene containing 30 mM of diphenylmethane-diisocyanate were introduced.

The polymeric solution was left to react for 1 hr at 25°C, and then transferred, under nitrogen atmosphere, to a flask containing 5 lt of anhydrous acetone. 62 g of polymers were obtained with the following results.

| | |
|---|---|
| Intrinsic viscosity = | 1.80 dl/g |
| $\overline{Mn}$ = | 59,000 |
| $\overline{Mw}$ = | 280,000 |
| $\overline{Mw}$ / $\overline{Mn}$ = | 4.75 |
| Ethylene content: 56%<br>Nitrogen content (after 2 consecutive dissolutions and precipitations) = 0.040%. | |

Example 3

Example 1 was duplicated using 50 mg of catalyst obtained by grinding in a steel mill anhydrous $MgCl_2$ and $TiCl_4$ in such quantity as to have a titanium content of 2% by wt, 4mM of $Al(C_2H_5)_3$, 10 mM of $Zn(C_2H_5)_2$ and bubbling an ethylene current at room temperature.

The same methodology of example 1 were followed isolating, after a reaction with diphenylmethane-diisocyanate, 150 g of polymer with the following characteristics:

| | |
|---|---|
| $\overline{Mn}$ = | 86,000 |
| $\overline{Mw}$ = | 440,000 |
| Nitrogen content: 0.079<br>Nitrogen content after dissolution in xylene and precipitation in methanol, 0.072. | |

Example 4

In a 100 cc flask have been introduced 96 mM of $TiCl_3ARA$, in toluenic suspension.

During a period of 10 minutes was added, while agitating and cooling the flask, a mixture of $Al(C_2H_5)_3$ - (154 mM) and $Zn(C_2H_5)_2$ (307 mM) dissolved in 500 cc. of anhydrous toluene.

Consequently were added 150 g of anhydrous styrene, and after polymerization (3 hrs at 20°C) it was precipitated and washed repeatedly with anhydrous epthane in an inert atmosphere, after which it was re-swollen 500 cc. of toluene and made to react with 7 g of diphenylmethane-diisocyanate for 6 hrs at 120°C.

The product obtained was precipitated in epthane in an inert atmosphere and vacuum dried.

100 g of polymer was obtained with the following characteristics:

| | |
|---|---|
| Intrinsic viscosity (tetrahydronaphthalene, 100°C) = | 1.1 dl/g |
| Nitrogen content after dissolution in xylene and precipitation in methanol = | 0.07%. |

## Example 5

In a 1 lt flask have been introduced, in nitrogen atmosphere, 600 cc of anhydrous xylene and 45 g of functionalized polypropylene prepared in example 1.

The temperature was brought to 135°. After the dissolution of the polypropylene 15 g of polyethylene glycol of $\overline{Mn}$ = 4000 (dehydrated for 8 hours in a vacuum at 120°C) were added.

The polymeric solution was stirred for 10 minutes, then the polymer was precipitated in methanol.

52.4 g of the product were obtained.

To make sure that the polyethylene glycol had effectively reacted with the polypropylene 3 different extractions were made on the product respectively with boiling methanol, toluene at room temperature, and boiling toluene.

In all three cases in the insoluble fraction, through IR spectroscopy, the presence of polyethylene glycol was noticed (recognizable by the stretching band of the C=O at 1110 $cm^{-1}$) which confirmed that it was chemically bound to the polypropylene.

## Example 6

In a 1.5 lt flask have been introduced, in nitrogen atmosphere, 700 cc of xylene and 30 g of functionalized polypropylene prepared in example 1.

The temperature was brought to 135° and after the dissolution of the polymer, 130 g of polyethylene glycol od $\overline{Mn}$ = 35000 (dehydrated in vacuum for 8 hrs at 120°C) were introduced.

The mixture was stirred for 20 minutes and then precipitated in methanol. 47 g of polymer were obtained.

The presence of chemically bound polyethylene glycol in the final product was confirmed, as per example 2, through extractions with methanol and tuelene, and consequent IR spectroscopy.

## Example 7

4 g of polybutylene terephthalate (PBT) ( $\overline{Mw}$ = 50000, $\overline{Mn}$ = 20000) were dissolved in 70 cc of sym-tetrachloroethane, bringing it to the boiling temperature in a 200 cc. flask.

After dissolution, 2.1 g of functionalized polypropylene prepared in example 1 were added.

The mixture was stirred for 7 hrs with continuous heating, and then precipitated in methanol.

6 g of product were obtained. This was submitted to extraction with boiling xylene to eliminate the polypropylene which did not react.

The residue of the extraction (67% by wt) showed the stretching bands C-H at 2840 and 2920 $cm^{-1}$, which indicate the presence of polypropylene bound to PBT.

## Example 8

In a glass reactor equipped with an anchor agitator have been charged:

7.5 g of maleic styrene-anhydride (containing 24% by wt of maleic anhydride)

15.2 g of functionalized polypropylene with isocyanic group prepared according to methods described in example 1;

20 cc of xylene.

The mixture was heated at 160°C under agitation thus obtained a solution; after 15 minutes an increase in viscosity was noticed.

The xylene was then left to evaporate and the temperature was brought to 180°C for 3 hrs obtaining a solid.

At the end of the reaction, the solid obtained was dissolved in boiling xylene and then precipitated in ethanol.

22.5 gr of polymer were obtained, which was submitted to extraction with boiling tetrahydrofuran for 8 hrs to eliminate the maleic styrene/anhydride copolymer which had not reacted.

The presence of maleic styrene/anhydride copolymer chemically bound to the polypropylene was verified in the insoluble fraction through IR spectroscopy (stretching bands of C=O at 1780 and 1850 $cm^{-1}$).

Example 9

120 g of polypropylene terminated with -ZnR were prepared according to methods described in example 1.

The solvent was removed and 500 cc of anhydrous cyclohexane were added together with methyl chloroformiate $ClCOOCH_3$.

The solvent was heated to a boil for 8 hrs.

The polymer was isolated and dried; the presence of $CCOCH_3$ terminals was confirmed through IR spectroscopy.

Example 10

120 g of polypropylene terminated with -ZnR were prepared according to methods described in example 1.

The solvent was then heated to the boiling temperature and refluxed for 8 hrs in the presence of dry air current.

Consequently 2 cc of concentrated HCl were added and the solvent heated to a boil for 2 additional hours.

The polymer was isolated, dried, and the presence of -OH terminals was confirmed through spectroscopy.

## Claims

1. Functionalized polymers of the formula:
PX
where P is a polymeric chain of a homo- or copolymer of $CH_2=CHR$ olefins, where R is hydrogen or an alkyl radical with 1 to 8 C or an aryl radical:
X is a functional group or a structure containing one or more functional groups.

2. Polymers and copolymers of $CH_2=CHR$ olefins formed mainly by polymers having the formula PX defined in claim 1.

3. Polymers according to claim 1 wherein X is a

$$-\overset{\overset{\displaystyle O}{\|}}{C}-NH-Y-N=CO$$

group, wherein Y is an aryl or alkyl radical containing from 6 to 14 C or an alkyl radical with 1-20 C.

4. Polymers according to claim 3 where Y is a phenylene substituted with isocyanic groups and/or with alkyl groups containing 1 to 6 C.

5. Polymers according to claim 1 where X is $-COO\ CH_3$.

6. Polymers according to claim 1 where X is $-OH$.

7. Polymers according to claim 1 where X is a $-CHR\ OH$ group, where R is an aliphatic radical with 1-10 C or an aryl radical.

8. Polymers according to claim 1 where X is a $-CO\ R$ radical, where R is an aliphatic radical with 1-10 C or an aryl radical.

9. Polymers according to claim 1 where X is an $-NH_2$ radical.

10. Polymers according to claim 1 where X is an —SCN radical.

11. Polymers according to claim 1 where X is a —CN radical.

12. Polymers according to claim 1 where P is a chain of a homo- or copolymer of propylene.

13. Polymers according to claim 12 where P is a chain of a homo-or copolymer of propylene where the polypropylene sequences have an isotactic structure.

14. Polymers according to claim 1 where P is a chain of a homo-or copolymer of ethylene.

15. Polymers according claim 1 wherein P is a chain of an amorphous copolymer of ethylene with propylene.

16. Polymers according to claim 15 where P is a chain of an amorphous ethylene copolymer with propylene containing minor proportions of units derived from a diene monomer.

17. Polymers according to claim 16 where the diene is selected among 1-4 hexadiene, ethylidene-norbornene and butadiene.

18 Block copolymers of the formula

$PQP'$

where P is a polymeric chain having the meaning defined in the preceding claims; Q is a bivalent radical; $P'$ is a polymer containing polar groups.

19. Block copolymers of the formula $PQP'QP$ where P, Q and $P'$ have the meaning defined in claim 18.

20. Block copolymers as per claims 18 and 19 where Q is selected among the radicals;

—NH CO—CH—; 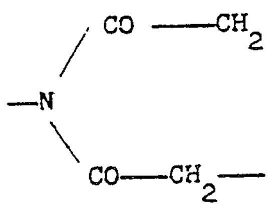 ; —NH COO —;

—CO—O—; —CNHCO—.

21. Block copolymers as per claims 18 and 20 where $P'$ is a chain of a polymer selected among polyesters, polyamides, polyacrylates, polymethacrylates, polyalkylene glycols.

22. Block copolymers as per the preceding claims obtained by reaction of polymers according to claim 1, or of compounds containing such polymers, with polymers selected among polyalkylene glycols, polyesters, polyamides.

23. Block copolymers obtained by reaction of polymers as per claim 4 with styrene copolymers with maleic anhydride.

24. Process for the preparation of the functionalized polymers PX of claims 1-17 comprising the step of reacting a polymer $P\text{-}ZnR'$ in which P has the meaning as set forth in claim 1 and $R'$ is an alkyl or aryl radical with 1-10 carbon atoms, with a compound reactive with the $ZnR'$ group, operating under conditions where at least one of the reactants is dissolved in an inert hydrocarbon solvent or is in the melted state.

25. Process according to claim 24 in which the reactive compound is selected among the group formed of chloroesters, ephichlorohydrin, chloramine, ketones, ketenes, aldehydes, chloroethers and oxygen.